# EUROPEAN PATENT APPLICATION

(11) **EP 1 835 693 A2**
(43) Date of publication of application: **19.09.2007**
(21) Application number: 07004802.0
(22) Date of filing: 08.03.2007
(51) Int. Cl.: H04L 29/06, H04Q 7/22, H04Q 7/38

(54) **Method and related apparatus for stopping point-to-multipoint MBMS service in a wireless communications system**

(30) Priority: 13.03.2006 US 767219 P
(71) Applicant: Innovative Sonic Limited, Tortola (VG)
(72) Inventor: Kuo, Richard Lee-Chee, Taipei City (TW)
(74) Representative: Hager, Thomas Johannes

(57) **Abstract**

A method (30) of stopping a point-to-multipoint (p-t-m) Multimedia Broadcast Multicast Service (MBMS) service utilized in a receiving terminal of a wireless communications system. The method includes the following steps of deactivating the p-t-m MBMS service by the receiving terminal (302), updating a variable corresponding to the p-t-m MBMS service after the receiving terminal accomplishes a leaving session of the p-t-m MBMS service (304), and releasing a resource that is used for receiving the p-t-m MBMS service by the receiving terminal (306).

## Description

This application claims the benefit of U.S. Provisional Application No. 60/767,219, filed on March 13, 2006 and entitled "Method and Apparatus to Handle the de-activation of a p-t-m MBMS Service in a Wireless Communications System", the contents of which are incorporated herein by reference.

The present invention relates to a method of stopping a point-to-multipoint (p-t-m) Multimedia Broadcast Multicast Service (MBMS) service utilized in a receiving terminal of a wireless communications system and related communications device according to the pre-characterizing clause of claims 1 and 7.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. To enhance multimedia functions in the 3G mobile telecommunications system, a protocol specification developed by the 3^{rd} Generation Partnership Project (3GPP) provides Multimedia Broadcast Multicast Service (MBMS). MBMS is a point-to-multipoint bearer service and is established on an existing network architecture of the Universal Mobile Telecommunications System (UMTS), utilizing Internet Protocol (IP) packets as a medium. Thus, MBMS allows a single source entity to transmit data to multiple user entities simultaneously.

Since the 3GPP has thoroughly defined operations and architecture of MBMS in the related specifications, the operations and architecture of MBMS are described only briefly hereinafter. For the universal mobile telecommunications system (UMTS), the 3G communications system comprises User Equipment (UE), the UMTS Terrestrial Radio Access Network (UTRAN), and the Core Network (CN). Communications protocols utilized include Access Stratum (AS) and Non-Access Stratum (NAS). AS comprises various sub-layers for different functions, including Radio Resource Control (RRC), Radio Link Control (RLC), Media Access Control (MAC), Packet Data Convergence Protocol (PDCP), and Broadcast/Multicast Control (BMC). The sub-layers mentioned, and their operating principles, are well known in the art, and detailed description thereof is omitted. For MBMS, the Core Network further comprises the Broadcast Multicast Service Center (BM-SC) that is not only a newly added network node but also an entry point for receiving external data, e.g. data provided by a content provider. The BM-SC manages provision, delivery, announcement, authorization, and storage of related parameters for MBMS services, and transmits corresponding information to the Gateway GPRS Support Node (GGSN). In the MBMS system architecture, the GGSN plays a role as an entry point for IP multicast traffic, and routes MBMS data to the Serving GPRS Support Node (SGSN) via a proper GPRS Tunnel (GTP). More than one SGSN can exist under the GGSN. The SGSN performs MBMS Bearer Service control functions to accurately transmit data packets to the UTRAN, allowing multiple UEs, which order the same MBMS service in the same UTRAN, to receive the same MBMS data. The SGSN can comprise more than one Radio Network Controller (RNC). The RNCs are responsible for efficiently allocating radio resources for the UEs according to the number of UEs counted by the Node-Bs (NB). The RNC comprises more than one NB that is responsible for transmitting or receiving radio waves to or from the UEs that can be mobile phones or PDAs.

According to the protocol specification developed by the 3GPP, MBMS offers two service modes: Broadcast mode and Multicast mode. When interested in a specific MBMS service, the UE needs to order the BM-SC for the MBMS service by establishing a service agreement including specific service provision phases. These two service modes have different service provision phases. The service provision phase of Broadcast mode includes Service announcement, Session Start, MBMS notification, Data Transfer and Session Stop. The service provision phase of Multicast mode includes Subscription, Service announcement, Joining, Session Start, MBMS notification, Data Transfer, Session Stop and Leaving. For realizing customized services, Joining and Leaving sessions utilized in Multicast mode enable the BM-SC to execute authorization and payment recording for the UEs at the Joining session. The service provision phases mentioned above are well known in the art, and will not be described in detail.

From the standpoint of the RRC, all logical data communication exchange channels, be they for providing data transmission exchange to the UE or for providing RRC layer control signal transmission exchange, are defined in the context of a Radio Bearer (RB). In the UE end, the RB comprises one unidirectional, or a pair of, uplink/downlink logic data transmission exchange channels. In the network end, the RB comprises one unidirectional, or a pair of, uplink/downlink logic data transmission exchange channels.

When providing the MBMS service, the UTRAN may obtain the number of the UEs ordering the MBMS service via a counting procedure, and can adopt either one of the following two transmission modes:
point-to-point (p-t-p) transmission and point-to-multipoint (p-t-m) transmission. In the p-t-p transmission, transmission between the UEs and the UTRAN utilizes a dedicated-channel, and thereby the Node-B establishes one dedicated channel for one UE to transmit data and
configuration. Compared with the p-t-p transmission, the p-t-m transmission allows the CN to provide the data and the configuration for multiple UEs in the same cell simultaneously. In addition, when the MBMS service is in Broadcast mode, only the p-t-m transmission is used. When the MBMS service is in Multicast mode, the UTRAN switches between the p-t-p and p-t-m transmissions according to the number of UEs. In the protocol specification developed by the 3GPP, three logical channels are defined to transmit corresponding MBMS information: MBMS point-to-multipoint Control Channel (MCCH), MBMS point-to-multipoint Traffic Channel (MTCH), and MBMS point-to-multipoint Scheduling Channel (MSCH). The three logical channels are mapped onto a transport channel, Forward Access Channel (FACH), and the FACH is mapped onto a physical channel, Secondary Common Control Physical Channel (S-CCPCH). MCCH is utilized to transmit a corresponding MBMS configuration, including MBMS Radio Bearer Information, MBMS Service Information, and other information. In general, before obtaining the MBMS configuration, the UE first has to receive System Information block type 5 or 5bis through S-CCPCH, and detect whether MCCH configuration carrying the above-mentioned information is included in the System Information block type 5 or 5bis.

Thus, when the UE is interested in an MBMS service, the UE establishes the service agreement with the BM/SC. If a Broadcast service is selected by multiple UEs in the same cell, the UTRAN establishes a p-t-m radio bearer(s) with the multiple UEs at Session Start. Oppositely, if a Multicast service is selected, the UTRAN performs a counting procedure to obtain the number of UEs at Session Start. Under the condition that the number of UEs exceeds a specific value, the UTRAN utilizes the p-t-m transmission and creates a p-t-m radio bearer(s) with the multiple UEs ordering the Multicast service to transfer service data. Otherwise, the UTRAN utilizes the p-t-p transmission and creates a p-t-p radio bearer with each of the multiple UEs under the condition that the number of UEs is smaller than the specific value.

In order for the UE and the UTRAN to understand the status of each current MBMS service efficiently, the protocol specification of 3GPP TS 25.331 V6.8.0 RRC Release 6 defines a variable, MBMS_ACTIVATED_SERVICES, used for storing information of the MBMS Multicast services the UE has joined, as well as the MBMS Broadcast services the UE is interested in receiving, such as Activated service list and Service type. Thus, the UE updates the content of the variable as the MBMS service status in the cell changes, e.g. When the UE joins or leaves a Multicast service. For an MBMS service, the UE may deactivate the MBMS service at any time after it has been inserted into the activated service list. As the MBMS service is deactivated, the UE performs a leaving session to notify the Gateway GPRS Support Node (GGSN), and thereby the GGSN responds to the UE with a confirmation. After receiving the confirmation, the UE removes the information corresponding to the MBMS service from Activated service list in the MBMS_ACTIVATED_SERVICES variable. Under this circumstance, the UE completes the removal, but does not stop reception of the MBMS service physically. That is, the UE may continue receiving data of the MBMS service. Furthermore, even though the UTRAN finishes providing the MBMS service and notifies the UE of the end of the MBMS service, the UE will not stop receiving, since the current specification specifies the UE to stop reception upon being notified only under the condition that the information corresponding to the MBMS service exists in the MBMS_ACTIVATED_SERVICES variable. However, at that moment, the information has been removed from the MBMS_ACTIVATED_SERVICES variable by the UE before the UTRAN finishes providing the MBMS service. Therefore, the UE may continue to receive the MBMS service after a user directs the UE to deactivate the MBMS service, resulting in power consumption and system resource waste.

This in mind, the embodiment of the present invention aims at providing a method for stopping a p-t-m MBMS service utilized in a receiving terminal of a wireless communications system and related communications device for saving resources of the receiving terminal.

**This is achieved by a** method of stopping a p-t-m MBMS service utilized in a receiving terminal of a wireless communications system and related communications device **according to claims 1 and 7. The dependent claims pertain to corresponding further developments and improvements.**

**As will be seen more clearly from the detailed description following below, the claimed** method of stopping a p-t-m MBMS service utilized in a receiving terminal of a wireless communications system and related communications device includes releasing a resource that is used for receiving the p-t-m MBMS service by the receiving terminal.

**In the following, the invention is further illustrated by way of example, taking reference to the accompanying drawings. Thereof:**
Fig. 1 is a functional block diagram of a communications device,
Fig. 2 is a diagram of program code in Fig. 1, and
Fig. 3 is a flow chart of a method according to an embodiment of the present invention.

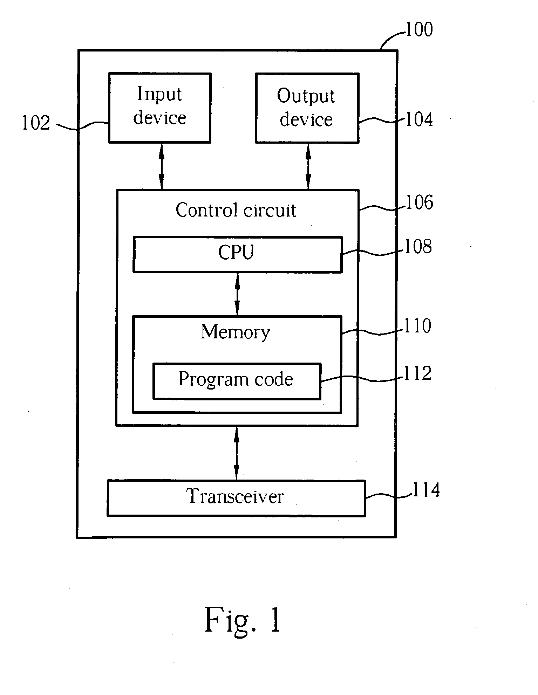

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

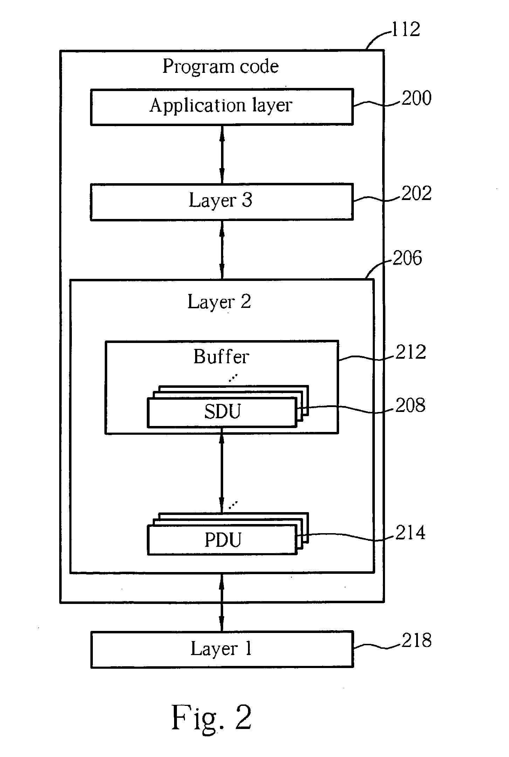

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. When signals are transmitted, the Layer 2 206 generates multiple serving data units (SDUs) 208 in a buffer 212 based on the data output by the Layer 3 202. The Layer 2 206 generates multiple protocol data units (PDUs) 214 according to the SDUs 208 and further outputs the PDUs 214 to Layer 1 218 for transmission. On the contrary, when wireless signals are received, the Layer 1 218 is used for receiving the wireless signals, and the received wireless signals are outputted in a format of the PDUs 214 to the Layer 2 206. The Layer 2 206 recovers the PDUs 214 to the SDUs 208 stored in the buffer 212. Finally, the Layer 2 206 transfers the SDUs 208 to the Layer 3 202.

Preferably, the communications device 100 is adopted in the 3G mobile telecommunications system, and used for receiving point-to-multipoint (p-t-m) Multimedia Broadcast Multicast Service (MBMS) services. The embodiment of the present invention configures corresponding algorithms in the program code 112 to accurately stop the p-t-m MBMS service to prevent a waste of system resources and power consumption in the communications device 100.

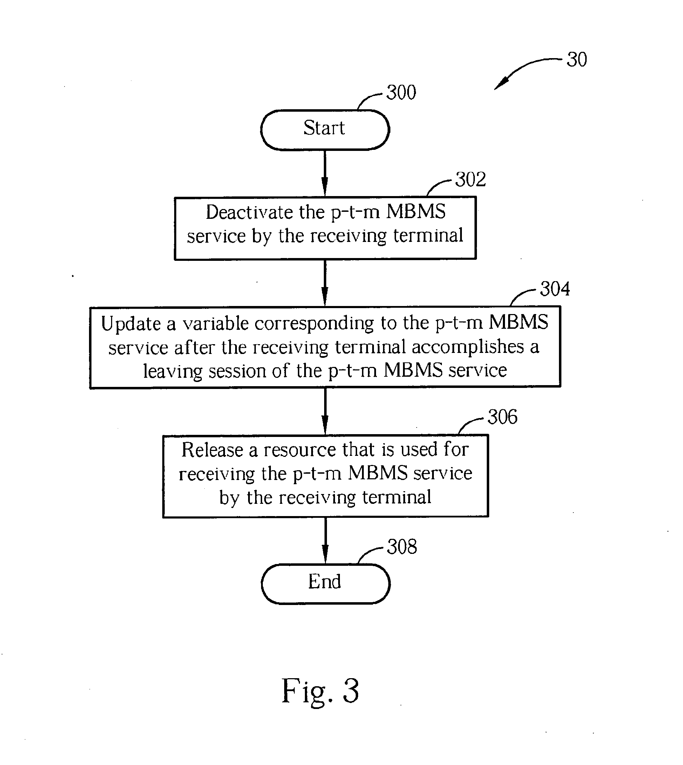

Please refer to Fig. 3, which is a flowchart of a process 30 according to an embodiment of the present invention. The process 30 is utilized to stop a point-to-multipoint (p-t-m) Multimedia Broadcast Multicast Service (MBMS) service utilized in a receiving terminal of a wireless communications system. The process 30 includes the following steps:
Step 300: Start.
Step 302: Deactivate the p-t-m MBMS service by the receiving terminal.
Step 304: Update a variable corresponding to the p-t-m MBMS service after the receiving terminal accomplishes a leaving session of the p-t-m MBMS service.
Step 306: Release a resource that is used for receiving the p-t-m MBMS service by the receiving terminal.
Step 308: End.

According to the process 30, when receiving the p-t-m MBMS service, the receiving terminal obtains current status of the p-t-m MBMS service via the variable utilized to store corresponding information of the p-t-m MBMS service, such as service items joined by the receiving terminal. Thus, when the receiving terminal would like to deactivate the p-t-m MBMS service, the receiving terminal can perform the leaving session of the p-t-m MBMS service to notify the network, such as the UTRAN and BM-SC, and the network then responds with a confirmation. If the confirmation is successfully sent to the receiving terminal, the leaving session of the p-t-m MBMS service is accomplished and is followed by an update of the variable in the receiving terminal. Subsequently, the resource that is used for receiving the p-t-m MBMS service by the receiving terminal is released, enabling the receiving terminal to stop reception of the p-t-m MBMS service. That is, through Step 304, a transmission channel(s) established between the receiving terminal and the network can truly be disconnected, since the variable is only utilized to record current service status of the receiving terminal, such as joining or leaving a p-t-m MBMS service.

For the third generation wireless telecommunications system, via a joining or leaving procedure applied by the UE regarded as the receiving terminal in the MBMS service, the UTRAN and the GGSN regarded as the network can obtain current information about p-t-m MBMS services the UE has joined or left, e.g. information in the MBMS_ACTIVATED_SERVICES variable. Moreover, the logical channels used for transmitting p-t-m MBMS services data are established between the UTRAN and the UE or released via corresponding radio bearers. The MBMS_ACTIVATED_SERVICES variable and the radio bearers have been explained in foregoing paragraphs. While a p-t-m MBMS service, preferably belonging to a Multicast service, is deactivated by the UE, the leaving session of the p-t-m MBMS service needs to be performed to notify the GGSN, and the leaving session is completed with a confirmation response from the GGSN to the UE. After that, information corresponding to the p-t-m MBMS service, such as a service name or type, is deleted from the MBMS_ACTIVATED_SERVICES variable in the UE. Eventually, a p-t-m radio bearer(s) corresponding to the p-t-m MBMS service is/are released so that the reception of the p-t-m MBMS service in the UE can be stopped physically and logically. Therefore, for the UE, in addition to performing the leaving session of the p-t-m MBMS service to notify the network and update the MBMS_ACTIVATED_SERVICES variable, the p-t-m radio bearer(s) needs to be released so as to stop the reception of the p-t-m MBMS service physically and logically. Therefore, through the embodiment of the present invention, the receiving terminal can avoid seemingly leaving the p-t-m MBMS service, thereby saving system resources and power.

To summarize, according to the prior art, when the p-t-m MBMS service provided by the UTRAN is deactivated by the receiving terminal, the leaving session is performed to notify the network (e.g. GGSN), and moreover the variable including information corresponding to the p-t-m MBMS service is updated after the leaving session is completed. However, simply updating the content of the variable does not make the UE really stop reception of the p-t-m MBMS service. In addition to the mentioned steps, the embodiment of the present invention further requires the receiving terminal to release the resource that is used for receiving the p-t-m MBMS service, which is/are a radio bearer(s), so as to disconnect the link utilized for transmitting service data. Therefore, the embodiment of the present invention can prevent the system resource waste and power consumption in the receiving terminal.

## Claims

1. A method of stopping a point-to-multipoint (p-t-m) Multimedia Broadcast Multicast Service (MBMS) service utilized in a receiving terminal of a wireless communications system comprising:
(a) deactivating the p-t-m MBMS service by the receiving terminal; and
(b) updating a variable corresponding to the p-t-m MBMS service after the receiving terminal accomplishes a leaving session of the p-t-m MBMS service;
**characterized in that** the method further comprises:
(c) releasing a resource that is used for receiving the p-t-m MBMS service by the receiving terminal.

2. The method of claim 1, **characterized in that** in step (c) the p-t-m MBMS service is a Multicast service.

3. The method of claim 1, **characterized in that** in step (b) the variable corresponding to the p-t-m MBMS service is MBMS_ACTIVATED_SERVICES variable.

4. The method of claim 1, **characterized in that** in step (c) releasing the resource that is used for receiving the p-t-m MBMS service by the receiving terminal is releasing at least a radio bearer of the receiving terminal corresponding to the p-t-m MBMS service.

5. The method of claim 1 **characterized in that** the wireless communications system is a third generation mobile telecommunications system.

6. An apparatus for implementing the method of claim 1.

7. A communications device (100) for providing a correct stop of a point-to-multipoint (p-t-m) Multimedia Broadcast Multicast Service (MBMS) service in a wireless communications system, the communications device comprising:
a control circuit (106) for realizing functions of the communications device (100);
a processor(108) installed in the control circuit (106), for executing a program code (112) to operate the control circuit (106); and
a memory (110) coupled to the processor (108) for storing the program code (112);
wherein the program code (112) comprises:
deactivating the p-t-m MBMS service by the communications device (100) ; and
updating a service variable after the communications device (100) accomplishes a leaving session of the p-t-m MBMS service;
**characterized by** the program code (112) releasing a resource that is used for receiving the p-t-m MBMS service by the communications device (100).

8. The communications device of claim 6, **characterized in that** the p-t-m MBMS service is a Multicast service.

9. The communications device of claim 6, **characterized in that** the variable corresponding to the p-t-m MBMS service is MBMS_ACTIVATED_SERVICES variable.

10. The communications device of claim 6, **characterized in that** releasing the resource that is used for receiving the p-t-m MBMS service by the communications device (100) is releasing at least a radio bearer of the communications device (100) corresponding to the p-t-m MBMS service.

11. The communications device of claim 6, **characterized in that** the wireless communications system is a third generation mobile telecommunications system.
